# EUROPÄISCHE PATENTSCHRIFT

(11) **EP 2 526 344 B1**
(45) Veröffentlichungstag und Bekanntmachung des Hinweises auf die Patenterteilung: **06.04.2016**
(21) Anmeldenummer: 11700747.6
(22) Anmeldetag: 17.01.2011
(51) Int. Cl.: F24D 11/00, F24D 19/10, H01M 8/04, H01M 8/06

(54) **VERFAHREN ZUM BETRIEB EINER KRAFT-WÄRME-KOPPLUNGSANLAGE**
METHOD FOR OPERATING A COGENERATION PLANT
PROCÉDÉ POUR FAIRE FONCTIONNER UNE INSTALLATION DE COUPLAGE CHALEUR-FORCE

(30) Priorität: 19.01.2010 DE 102010001011
(43) Veröffentlichungstag der Anmeldung: 28.11.2012
(73) Patentinhaber: Robert Bosch GmbH, 70442 Stuttgart (DE)
(72) Erfinder: FRIEDE, Wolfgang, 71636 Ludwigsburg (DE); LIMBECK, Uwe, 73230 Kirchheim Unter Teck (DE)
(86) Internationale Anmeldenummer: PCT/EP2011/050502
(87) Internationale Veröffentlichungsnummer: WO 2011/089082

(56) Entgegenhaltungen:
- EP-A1- 0 818 840
- EP-A2- 1 361 621
- EP-A2- 1 835 240
- JP-A- 2006 073 316

## Beschreibung

Die Erfindung betrifft ein Verfahren zum Betrieb einer Kraft-Wärme-Kopplungsanlage gemäß dem Oberbegriff des Anspruchs 1. Weiterhin betrifft die Erfindung eine Kraft-Wärme-Kopplungsanlage gemäß dem Oberbegriff von Anspruch 9. Ein solches Verfahren bzw. eine solche Kraft-Wärme-Kopplungsanlage ist z.B. aus der JP 2006 073316 A bekannt.

### Stand der Technik

In einer Kraft-Wärme-Kopplungsanlage wird, z.B. durch eine Brennstoffzellenanlage, Strom erzeugt, wobei die bei der Stromproduktion entstandene Abwärme einer weiteren Verwendung, z.B. einem Heizkreis für eine Raumbeheizung und/oder einem Warmwassersystem, zur Verfügung gestellt wird. Hierbei kann es zu gewissen Tages- oder Jahreszeiten geschehen, dass ein momentaner Wärmebedarf, d.h. die Wärme, die für die Raumbeheizung und/oder für das Warmwassersystem benötigt wird, die bei der Stromerzeugung entstandene Abwärme übersteigt.

Die DE 102 58 707 A1 offenbart eine Anlage mit einem Brennstoffzellenheizgerät und mit einem zusätzlich zu dem Brennstoffzellenheizgerät in der Anlage angeordnetem Zusatzheizgerät. Weiterhin ist ein Schichtenspeicher zum Speichern von Warmwasser vorgesehen. Das Zusatzheizgerät wird zugeschaltet, wenn in einem oberen Teil des Schichtenspeichers die Temperatur des Warmwassers eine Solltemperatur unterschreitet und somit nicht mehr genug Warmwasser zur Verfügung steht. So kann genug Wärme auch bei Spitzen im Wärmebedarf generiert werden.

Die Druckschrift JP2006 073316 A offenbart eine Kraft-Wärme-Kopplungsanlage, in der bei erhöhtem Wärmebedarf die Brennstoffzufuhr zur Brennstoffzelle und/oder zu einem Nachwärmbrenner erhöht wird.

Wird eine Brennstoffzellenanlage zur Stromerzeugung ohne Wärmeauskopplung betrieben, so wird versucht, einen möglichst hohen Anteil des zugeführten Brennstoffs elektrochemisch reagieren zu lassen, ohne dass es zu einer Alterung der Brennstoffzelle kommt. Zur Erzeugung einer gewünschten elektrischen Leistung wird also möglichst wenig Brennstoff zugeführt. Es muss ein möglichst hoher Anteil an Brennstoff elektrochemisch umgesetzt werden, um einen möglichst hohen Wirkungsgrad zu erzielen, wobei sich der Wirkungsgrad auf die elektrische Leistungsabgabe pro zugeführter Brennstoffmenge bezieht. Auf der anderen Seite muss aber, um eine Alterung zu vermeiden, die Brennstoffzellenanlage, die üblicherweise eine Vielzahl von Brennstoffzellen aufweist, überstöchiometrisch betrieben werden. Das heißt, dass mehr Brennstoff der Anode und mehr Oxidationsmittel der Kathode zugeführt werden muss, als dort elektrochemisch reagiert. Hierdurch lässt sich eine Unterversorgung einzelner Elektroden oder Elektrodenbereiche vermeiden. Eine Unterversorgung führt zu unerwünschten Nebenreaktionen, zu ungleicher elektrischer Spannungs- und gegebenenfalls elektrischer Stromverteilung und zu einer ungleichen Temperaturverteilung in den Brennstoffzellen, wodurch die Brennstoffzellen altern. An einem optimalen Betriebspunkt der Brennstoffzelle wird ein maximal möglicher Anteil an Brennstoff in den Brennstoffzellen elektrochemisch umgesetzt, ohne dass es zu einer schnellen Alterung der Brennstoffzellen kommt. Für den Betrieb bei Volllast und für verschiedene Teillastzustände können jeweils optimale Betriebspunkte festgelegt werden. Der in den Brennstoffzellen nicht umgesetzte, unverbrauchte Brennstoff kann rezirkuliert oder in einem Nachbrenner verbrannt werden.

Da es sich bei dem optimalen Betriebspunkt um einen Kompromiss zwischen dem elektrischen Wirkungsgrad und einer Alterung der Brennstoffzellen handelt, ist eine Alterung am optimalen Betriebspunkt der Brennstoffzelle nicht minimal. Unter Alterung wird hier ein Rückgang des Wirkungsgrads oder der Leistung mindestens einer Brennstoffzelle über die Zeit verstanden, der verschiedene Ursachen haben kann.

### Offenbarung der Erfindung

Es ist Aufgabe der Erfindung, ein Verfahren für einen Betrieb einer Kraft-Wärme-Kopplungsanlage zur Verfügung zu das die Kraft-Wärme-Kopplungsanlage Optimiert.

Zur Lösung der Aufgabe wird ein Verfahren mit sämtlichen Merkmalen des Anspruchs 1 vorgeschlagen. Vorteilhafte Weiterbildungen des Verfahrens sind in den abhängigen Verfahrensansprüchen angegeben. Die Aufgabe wird weiterhin gelöst durch eine Kraft-Wärme-Kopplungsanlage mit sämtlichen Merkmalen des unabhängigen Anspruchs 9. Vorteilhafte Weiterbildungen der Kraft-Wärme-Kopplungsanlage sind in dem abhängigen Vorrichtungsanspruch angegeben.

Eine erfindungsgemäße Kraft-Wärme-Kopplungsanlage weist eine Brennstoffzellenanlage mit mindestens einer Brennstoffzelle und einem Nachbrenner auf. In der Brennstoffzellenanlage wird eine elektrische Spannung und gegebenenfalls ein elektrischer Strom in der Brennstoffzelle und Wärme in der Brennstoffzelle und im Nachbrenner erzeugt. Zusätzlich weist die Kraft-Wärme-Kopplungsanlage ein Zusatzheizgerät auf, in dem Wärme durch Verbrennen eines zweiten Brennstoffes erzeugt wird, wenn der Wärmebedarf durch die in der Brennstoffzellenanlage abgegebene Wärme nicht gedeckt werden kann. Das Zusatzheizgerät kann ein Kessel, eine Therme oder ein Brenner sein. Es kann mit der Brennstoffzellenanlage in einem Gerät integriert oder als ein separates Gerät ausgebildet sein. Insbesondere können die Brennstoffzellenanlage und das Zusatzheizgerät Komponenten gemeinsam nutzen, z. B. einen Wärmetauscher oder eine Brennstoffzufuhr. Zur Erhöhung einer Laufzeit der Brennstoffzellenanlage und Entkopplung von Verbrauch und Produktion von Wärme kann ein Wärmespeicher eingesetzt werden, der z. B. ein Pufferspeicher, ein Warmwasserspeicher oder ein Kombispeicher sein kann.

Die Erfindung basiert auf der Erkenntnis, dass ein optimaler Betriebspunkt der Brennstoffzelle nicht einem vorteilhaftesten Betriebspunkt der Kraft-Wärme-Kopplungsanlage entsprechen muss. Als optimaler Betriebspunkt der Brennstoffzelle wird der Betriebspunkt angesehen, bei dem ein möglichst hoher erster Anteil an erstem Brennstoff in der Brennstoffzelle elektrochemisch umgesetzt wird, ohne dass eine festgelegte Alterungsrate der Brennstoffzelle überschritten wird. Der erste Anteil des ersten Brennstoffes wird auch als Gasnutzungsgrad bezeichnet und entspricht dem Anteil des ersten Brennstoffes, der in der Brennstoffzelle umgesetzt wird, bezogen auf die Menge des ersten Brennstoffes, die der Brennstoffzellenanlage zugeführt wird. Er kann im optimalen Betriebspunkt der Brennstoffzelle beispielsweise bei 70 % bis 80 % liegen und wird als optimaler erster Anteil bezeichnet. Ein erniedrigter erster Anteil des ersten Brennstoffs bezeichnet im Folgenden einen ersten Anteil, der unterhalb des ersten Anteils am optimalen Betriebspunkt der Brennstoffzelle liegt.

Eine Kraft-Wärme-Kopplungsanlage kann an einem anderen Betriebspunkt als eine nur auf Stromerzeugung ausgerichtete Brennstoffzelle am vorteilhaftesten betrieben werden, da in einer Kraft-Wärme-Kopplungsanlage sowohl die erzeugte elektrische Leistung als auch die erzeugte Wärme verwendet werden und somit in den Wirkungsgrad der Kraft-Wärme-Kopplungsanlage einfließen. Das erfindungsgemäße Verfahren wird im Folgenden mit einem Betriebspunkt der Kraft-Wärme-Kopplungsanlage verglichen, an dem die Brennstoffzelle an ihrem optimalen Betriebspunkt betrieben wird und der hierdurch nicht gedeckte, hohe Wärmebedarf durch das Verbrennen des zweiten Brennstoffes im Zusatzheizgerät gedeckt wird. Im Vergleich hierzu ist erfindungsgemäß vorgesehen, dass ein erster Anteil des ersten Brennstoffes erniedrigt ist, damit mehr erster Brennstoff die Brennstoffzelle unumgesetzt passiert und im Nachbrenner verbrannt werden kann. Es wird zwar erfindungsgemäß mehr erster Brennstoff im Nachbrenner verbrannt, jedoch muss kein oder entsprechend weniger zweiter Brennstoff im Zusatzheizgerät verbrannt werden. Hierdurch ist die Menge an insgesamt verbrannten ersten und zweiten Brennstoff und somit der Wirkungsgrad der Kraft-Wärme-Kopplungsanlage in etwa konstant, wobei jedoch durch den niedrigeren ersten Anteil des ersten Brennstoffes eine Unterversorgung einzelner Stellen der Brennstoffzelle oder bei einer Vielzahl von Brennstoffzellen eine Unterversorgung einzelner Brennstoffzellen verringert wird. Hierdurch wird eine Alterung der Brennstoffzelle wirksamer als im optimalen Betriebspunkt der Brennstoffzelle vorgebeugt.

Im folgenden Absatz beziehen sich die Vergleiche auf einen optimalen Betriebspunkt der Brennstoffzelle. Es kann sein, dass der erste Anteil des ersten Brennstoffes erniedrigt ist, weil auf Grund einer reduzierten Stromproduktion bei gleichem Durchsatz des ersten Brennstoffes durch die Brennstoffzelle weniger Brennstoff in der Brennstoffzelle elektrochemisch umgesetzt wird. Vorzugsweise wird der erniedrigte erste Anteil des ersten Brennstoffes jedoch dadurch erzeugt, dass mehr erster Brennstoff durch die Brennstoffzelle geleitet wird und ein Durchsatz durch die Brennstoffzelle steigt. In beiden Fällen wird die lokale Konzentration des ersten Brennstoffes an einer Anode der Brennstoffzelle erhöht, so dass eine höhere elektrische Spannung in der Brennstoffzelle erzeugt wird. Hierdurch ergibt sich der Vorteil, dass bei gleicher elektrischer Leistung die Brennstoffzelle einen geringeren Strom produzieren muss. Hierdurch wird zusätzlich einer Alterung der Brennstoffzelle vorgebeugt. Es kann vorgesehen sein, dass dieser zusätzliche Vorteil genutzt wird und die elektrische Leistung konstant gehalten wird. Alternativ kann vorgesehen sein, dass ein durch die Brennstoffzelle erzeugter elektrischer Strom konstant gehalten wird. Hierbei muss der Durchsatz an ersten Brennstoff durch die Brennstoffzelle erhöht sein, um einen erniedrigten ersten Anteil bei gleicher Stromproduktion zu erhalten. Alternativ kann auch die Spannung konstant gehalten werden. Ein Wechselrichter kann hierbei die Brennstoffzelle auf einen konstanten Strom, auf eine konstante Leistung oder eine konstante Spannung einregeln.

Vorteilhafterweise kann der erste Anteil des ersten Brennstoffes nur bis zu einem unteren Grenzwert erniedrigt werden. Dieser untere Grenzwert kann beispielsweise einem Gasnutzungsgrad von etwa 50 bis 60 % entsprechen. Eine weitere Absenkung des ersten Anteils kann aus Gründen des Strömungswiderstandes der Brennstoffzelle, eines zu hohen Druckes in der Brennstoffzelle und/oder eine unnötige Reformierung des ersten Brennstoffes unerwünscht sein.

Eine folgende Steuerung und/oder Regelung der Kraft-Wärme-Kopplungsanlage kann vorgesehen sein: Ist ein Wärmebedarf geringer oder gleich einer Wärme, die von der Brennstoffzellenanlage bei einem optimalen Betriebspunkt der Brennstoffzelle zur Verfügung gestellt werden kann, so wird ein entsprechender optimaler erster Anteil des Brennstoffes, z.B. 70-80%, in der Brennstoffzelle elektrochemisch umgesetzt. Ist hingegen der Wärmebedarf so hoch, wie von der Brennstoffzellenanlage bei einer Einstellung des ersten Anteils des ersten Brennstoffes zwischen dem unteren Grenzwert und dem optimalen ersten Anteil zur Verfügung gestellt werden kann, so wird nur in der Brennstoffzellenanlage die geforderte Wärme erzeugt. Im Zusatzheizgerät wird kein zweiter Brennstoff verbrannt. Wenn der Wärmebedarf höher ist, als von der Brennstoffzellenanlage bei einer Einstellung des ersten Anteils des ersten Brennstoffes an dem unteren Grenzwert zur Verfügung gestellt werden kann, wird ein zweiter Brennstoff in dem Zusatzheizgerät verbrannt, um zusätzliche Wärme zu erzeugen. Das heißt, dass der zweiter Brennstoff in dem Zusatzheizgerät erst verbrannt wird, wenn selbst bei einem ersten Anteil des ersten Brennstoffes an dem unteren Grenzwert, z.B. 50-60%, die von der Brennstoffzellenanlage kommende Wärme den Wärmebedarf nicht mehr deckt. Wird also der Wärmebedarf ausgehend von einem Wärmebedarf, der geringer oder gleich einer Wärme, die von der Brennstoffzellenanlage bei einem optimalen Betriebspunkt der Brennstoffzelle zur Verfügung gestellt werden kann, erhöht, so dass der Wärmebedarf bei einem optimalen ersten Anteil des ersten Brennstoffes nicht mehr gedeckt werden kann, so wird der erste Anteil des ersten Brennstoffs bis minimal zum unteren Grenzwert erniedrigt. Steigt der Wärmebedarf noch weiter an, so dass der Wärmebedarf auch mit einem ersten
Anteil des ersten Brennstoffs am unteren Grenzwert nicht gedeckt werden kann, so veranlasst eine Steuerung und/oder Regelung, dass ein zweiten Brennstoff dem Zusatzheizgerät zugeführt und dort verbrannt wird. Sinkt der Wärmebedarf davon ausgehend wieder, so wird zunächst die Zufuhr des zweiten Brennstoffes zum Zusatzheizgerät unterbunden. Sinkt der Wärmebedarf noch weiter, so wird der erste Anteil des ersten Brennstoffs bis maximal zum optimalen ersten Anteil erhöht.

Die von der Kraft-Wärme-Kopplungsanlage zur Verfügung gestellte Wärme kann für verschiedene Verwendungseinrichtungen, z.B. eine Raumbeheizung und/oder für ein Warmwassersystem öffentlicher oder privater Gebäude und/oder für industrielle Prozesse z.B. als eine Prozesswärme der chemischen Industrie oder bei einer Lebensmittelherstellung verwendet werden. Im Folgenden wird beispielhaft von einer Verwendung der Wärme für eine Raumbeheizung und ein Warmwassersystem in einem Haushalt ausgegangen.

Wasser als wärmeaufnehmendes Medium durchströmt erfindungsgemäß die Brennstoffzellenanlage und das Zusatzheizgerät nacheinander oder parallel in einem Kreislauf und transportiert die Wärme der Kraft-Wärme-Kopplungsanlage zu den Verwendungseinrichtungen. Im Falle einer strömungstechnischen Reihenanordnung ist insbesondere vorgesehen, dass das wärmeaufnehmende Medium zunächst die Brennstoffzellenanlage und danach das Zusatzheizgerät durchströmt.

Es kann sein, dass der Wärmebedarf durch Messen einer Außentemperatur des Gebäudes, einer oder mehrerer Temperaturen des Kreislaufes des wärmeaufnehmenden Mediums, ein oder mehrerer Temperaturen eines Heizkreises der Raumbeheizung, einer entnommenen Warmwassermenge des Warmwassersystems und/oder mindestens einer Temperatur eines Wärmespeichers, insbesondere mehrerer Temperaturen an unterschiedlichen Stellen des Wärmespeichers, ermittelt wird. Hierbei dient der Wärmespeicher zur Speicherung von Wärme in den Zeiten, in denen die Stromproduktion den Wärmebedarf übersteigt. Insbesondere bei einer Messung der Außentemperatur kann ein Wärmebedarf vorausschauend ermittelt werden. Auch der zeitliche Verlauf der gemessenen Temperaturen, insbesondere der Temperatur oder der Temperaturen im Wärmespeicher, können zur Ermittlung des Wärmebedarfs herangezogen werden. Der Kreislauf des wärmeaufnehmenden Mediums kann den Heizkreis der Raumbeheizung beinhalten, d.h. das wärmeaufnehmende Medium kann sowohl die Wärme der Kraft-Wärmekopplungsanlage zu den Verwendungseinrichtungen transportieren als auch einen Heizkreis der Raumbeheizung durchlaufen und Wärme dort wieder abgeben. Die Temperatur des wärmeaufnehmenden Mediums kann an jeglicher Stelle des Kreislaufes und/oder des Heizkreises gemessen werden. Insbesondere wird im Falle einer Reihenanordnung von Zusatzheizgerät und Nachbrenner die Temperatur des wärmeaufnehmenden Mediums hinter zu hinterst Angeordneten von dem Zusatzheizgerät und dem Nachbrenner gemessen. Im Falle einer parallelen Anordnung von Zusatzheizgerät und Nachbrenner wird vorzugsweise die Temperatur nach einer Zusammenführung eines Strömungspfades des Kreislaufes, das den Nachbrenner enthält, und eines Strömungspfades des Kreislaufes, das das Zusatzheizgerät enthält, gemessen.

Es ist denkbar, dass die Zufuhr an zweitem Brennstoff zu dem Zusatzheizgerät und/oder die Zufuhr an erstem Brennstoff zu der Brennstoffzelle und/oder der Brennstoffzellenanlage durch eine gemeinsame Steuerung und/oder Regelung eingestellt wird. Hierbei wird mindestens eine der oben genannten Temperaturen an die Steuerung und/oder Regelung übermittelt, die daraufhin die Zufuhr an erstem Brennstoff und eventuell die zusätzliche Zufuhr an zweitem Brennstoff gemäß dem Wärmebedarf, wie oben beschrieben, einstellt. Alternativ kann die Zufuhr an zweitem Brennstoff zu dem Zusatzheizgerät und/oder die Zufuhr an erstem Brennstoff zu der Brennstoffzelle oder der Brennstoffzellenanlage jeweils durch eine eigenständige Steuerung und/oder Regelung erfolgen, wobei insbesondere jede Steuerung und/oder Regelung die Temperatur eines Wärmespeichers, und/oder mindestens eine Temperatur des wärmeaufnehmenden Mediums kennt.

Die Zufuhr des zweiten Brennstoffes zu dem Zusatzheizgerät und/oder die Zufuhr des ersten Brennstoffes zu der Brennstoffzelle kann durch Verdichter, die hinter dem Zusatzheizgerät und/oder der Brennstoffzelle angeordnet sind, gesteuert oder geregelt werden. Zusätzlich kann durch Ventile, die vor dem Zusatzheizgerät und/oder der Brennstoffzelle angeordnet sind, ein Verhältnis von einem Oxidationsmittel, das zu einer Kathode der Brennstoffzelle geführt wird, und dem ersten Brennstoff beeinflusst werden. Soll das Verhältnis von Oxidationsmitteln zu dem ersten Brennstoff nicht verändert werden, können auch Drosseln anstelle der Ventile verwendet werden. Alternativ können sich Verdichter vor dem Zusatzheizgerät und/oder der Brennstoffzelle befinden.

Die Aufgabe wird auch gelöst durch eine Kraft-Wärme-Kopplungsanlage mit einer Brennstoffzellenanlage gemäß Anspruch 9.

Bei der Brennstoffzelle kann es sich um eine SOFC (Solid Oxid Fuel Cell) handeln. Hierbei kann die Brennstoffzellenanlage mehrere Brennstoffzellen aufweisen, die zu einem Brennstoffzellenstapel oder zu einem Brennstoffzellenbündel zusammen gefasst sein können. Bei dem ersten Brennstoff kann es sich um Erdgas, Biogas, reines Methan oder längerkettige Kohlenwasserstoffe wie Propan, Diesel, Benzin, Kerosin, Flüssiggas oder Heizöl handeln. Alternativ kann der erste Brennstoff Methanol oder ein längerkettiger Alkohol sein. Der erste Brennstoff kann vor dem Eintritt in die Brennstoffzelle oder in der Brennstoffzelle teilweise oder vollständig reformiert werden. Hierbei entsteht ein Brennstoff, das reich an Wasserstoff und/oder Kohlenmonoxid ist. Unter dem ersten Brennstoff wird sowohl der reformierte als auch der unreformierte Brennstoff verstanden. Ein Teil der in der Brennstoffzelle und/oder im Nachbrenner erzeugten Wärme kann für die Reformierung benötigt werden.

Es kann sein, dass ein dritter Anteil des aus der Brennstoffzelle austretenden ersten Brennstoffes der Brennstoffzelle durch eine Rezirkulation wieder zur Verfügung gestellt wird. Der zweite Anteil des ersten Brennstoffes wird somit um den dritten Anteil vermindert. Bei dem zweiten Anteil, der die Brennstoffzelle ohne Umsetzung verlässt und im Nachbrenner verbrannt wird, muss es sich also nicht um den vollständigen, in der Brennstoffzelle nicht umgesetzten Anteil handeln. Der dritte Anteil kann ebenfalls gemäß dem Wärmebedarf eingestellt werden und insbesondere bei einem steigenden Wärmebedarf verringert werden. Der zweite und der dritte Anteil sind ebenfalls auf die Menge des ersten Brennstoffes, die der Brennstoffzellenanlage zugeführt wird, bezogen.

Der Nachbrenner der Brennstoffzellenanlage und das als Brenner ausgebildete Zusatzheizgerät können einen gemeinsamen Brennraum aufweisen. Hierbei wird der erste Brennstoff dem gemeinsamen Brennraum durch die Brennstoffzelle zugeführt. Der zweite Brennstoff wird direkt, ohne die Brennstoffzelle zu durchströmen, dem gemeinsamen Brennraum zugeführt. In diesem Fall kann das erfindungsgemäße Verfahren und die Steuerungs- und/oder Regelungseinrichtung der erfindungsgemäßen Kraft-Wärme-Kopplungsanlage zur Steuerung und/oder Regelung des Verhältnisses des ersten Brennstoffes zum zweiten Brennstoff zu dem gemeinsamen Brennraum angewendet werden.

Bei dem zweiten Brennstoff kann es sich um die dieselbe Substanz wie beim ersten Brennstoff handeln. Der zweite Brennstoff und der erste Brennstoff können aber auch unterschiedliche Substanzen sein. Bei dem Zusatzheizgerät kann es sich um ein Gasbrennwertheizgerät handeln.

Weitere die Erfindung verbessernde Maßnahmen ergeben sich aus der nachfolgenden Beschreibung zu den Ausführungsbeispielen der Erfindung, welche in den Figuren schematisch dargestellt ist. Es zeigen:
- Fig. 1: eine schematische Zeichnung eines ersten Ausführungsbeispiels einer erfindungsgemäßen Kraft-Wärme-Kopplungsanlage mit zwei Verwendungseinrichtungen,
- Fig. 2: eine schematische Zeichnung eines zweiten Ausführungsbeispiels einer erfindungsgemäßen Kraft-Wärme-Kopplungsanlage mit zwei Verwendungseinrichtungen und
- Fig. 3: eine schematische Auftragung einer elektrischen Spannung über eines elektrischen Stroms bei verschiedenen ersten Anteilen eines ersten Brennstoffes.

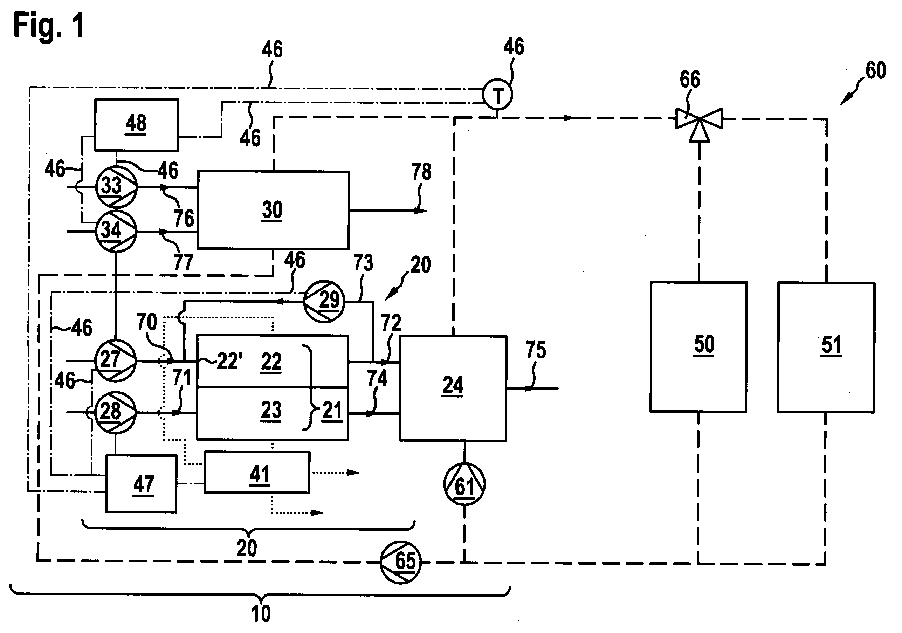

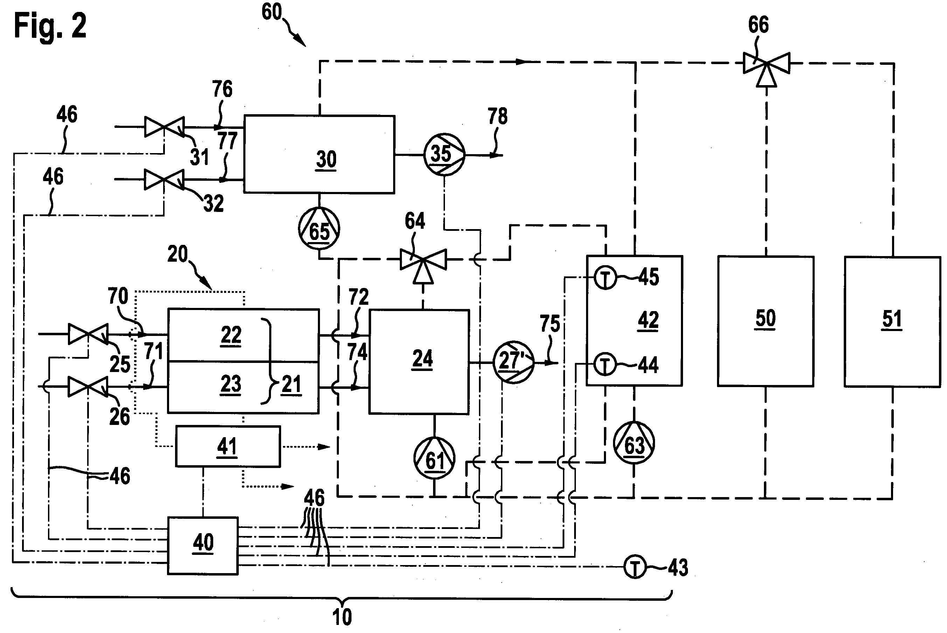

Elemente mit gleicher Funktion und Wirkungsweise sind in den Figuren 1 und 2 mit denselben Bezugszeichen versehen.

In Fig. 1 ist ein erstes Ausführungsbeispiel einer erfindungsgemäßen Kraft-Wärme-Kopplungsanlage 10 dargestellt. Die Kraft-Wärme-Kopplungsanlage 10 stellt Wärme für zwei Verwendungseinrichtungen, einem Heizkreis 50 einer Raumbeheizung und einem Warmwassersystem 51 für ein nicht dargestelltes Gebäude zur Verfügung. Die Kraft-Wärme-Kopplungsanlage 10 weist eine Brennstoffzellenanlage 20 mit einer exemplarischen Brennstoffzelle 21, einer Anode 22 und einer Kathode 23 und einem Nachbrenner 24 auf. Durch einen ersten Verdichter 27 wird Erdgas als ein erster Brennstoff der Anode 22 in einem Strömungsweg 70 zugeführt. Ebenfalls wird durch einen zweiten Verdichter 28 Sauerstoff enthaltene Luft als Oxidationsmittel der Kathode 23 in einem Strömungsweg 71 zugeführt. Der erste und zweite Verdichter 27, 28 sind vor der Brennstoffzelle 21 angeordnet. An der Anode 22 wird das Erdgas u.a. zu Wasserstoff und Kohlenmonoxid reformiert und ein erster Anteil des Wasserstoffs und des Kohlenmonoxids elektrochemisch umgesetzt, wobei ein elektrischer Strom und Wärme entsteht. Ein Strom aus unumgesetzten Wasserstoff und Kohlenmonoxid, Wasser und Kohlendioxid als Reaktionsprodukt und weiteren Reformatprodukten verlässt die Anode 22 auf einem Strömungsweg 72 und wird teilweise in einem Rezirkulationsströmungsweg 73 an einen Eingang 22' der Anode 22 und teilweise in den Nachbrenner 24 geleitet. Eine Verdichtungsvorrichtung 29 auf dem Rezirkulationsströmungsweg 73 kann einstellen, wie viel Wasserstoff zur Anode 22 zurück und wie viel Wasserstoff zum Nachbrenner 24 gelangt. Im Nachbrenner 24 werden der Wasserstoff und der von der Kathode 23 auf einem Strömungsweg 74 kommende, unumgesetzte Sauerstoff verbrannt, wobei Wärme erzeugt wird. Die Verbrennungsprodukte verlassen den Nachbrenner 24 durch einen gemeinsamen Abgasstrom 75. Der erste Anteil an Wasserstoff kann zwischen dem optimalen Anteil und dem unteren Grenzwert, also in etwa zwischen 50 bis 80 % variieren, je nach dem, ob und zu welchem Anteil die Wärme, die gemäß dem elektrischen Strombedarf produziert wird, den Wärmebedarf deckt.

Deckt die Wärme, die von der Brennstoffzellenanlage bei einem ersten Anteil des Wasserstoffs am unteren Grenzwert den Verwendungseinrichtungen 50, 51 zur Verfügung gestellt wird, den Wärmebedarf nicht, so wird in einem Zusatzheizgerät 30 Erdgas als ein zweiter Brennstoff verbrannt. Hierzu wird mit Hilfe eines dritten Verdichters 33 das Erdgas auf einem Strömungsweg 76 und Luft mit Hilfe eines vierten Verdichters 34 auf einem Strömungsweg 77 dem Zusatzheizgerät 30 zugeführt. Strömungswege der Brennstoffe sowie der Luft 70, 71, 72, 73, 74, 75, 76, 77, 78 sind mit durchgezogenen Linien dargestellt.

Durch einen Wechselrichter 41, der den von der Brennstoffzelle 21 produzierten Gleichstrom in Wechselstrom umwandelt, kann ein konstanter Strom, eine konstante Leistung oder eine konstante Spannung vorgegeben werden. Elektrische Leitungen zu und von dem Wechselrichter 41 sind gepunktet dargestellt. Ein Anschluss an einen Stromkreislauf mit einem Verbraucher ist nicht dargestellt.

Wasser als ein Wärme aufnehmendes Medium wird in einem Kreislauf 60 geführt. Strömungspfade des Kreislaufes 60 sind mit gestrichelten Linien dargestellt. Hierbei durchströmt das Wasser mit Hilfe einer Pumpe 61 den Nachbrenner 24 und gegebenenfalls mit Hilfe einer Pumpe 65 das strömungstechnisch parallel angeordnete Zusatzheizgerät 30 und nimmt Wärme auf, die dann in den Verwendungseinrichtungen 50, 51 wieder abgegeben wird. Die Verwendungseinrichtungen 50, 51 sind strömungstechnisch parallel angeordnet. Der Anteil des Wassers, das jeweils die Verwendungseinrichtungen 50, 51 durchströmt, kann durch ein 3/2 Wegeventil 66 eingestellt werden. Die in der Brennstoffzelle 21 selber erzeugte Wärme wird durch die Ströme der Strömungswege 72, 74 in den Nachbrenner 24 transportiert und von dort an das Wasser übertragen.

Das Zusatzheizgerät 30 und die Brennstoffzellenanlage 20 weisen zwei getrennte Regelungseinrichtungen 47, 48 auf. An beide Regelungseinrichtungen 47, 48 wird eine Temperatur des Wassers, das den Nachbrenner 24 und gegebenenfalls das Zusatzheizgerät 30 verlassen hat, übermittelt. Die Temperatur des Wassers wird in einem Temperaturmessgerät 46 ermittelt, wobei das Temperaturmessgerät 46 nach einer Zusammenführung der parallelen Strömungspfade durch das Zusatzheizgerät 30 und den Nachbrenner 24 im Kreislauf 60 angeordnet ist. Die Regelungseinrichtung 47 der Brennstoffzellenanlage 20 stellt anhand der ermittelten Temperatur die elektrische Leistung des ersten und zweiten Verdichters 27, 28 und der Verdichtungsvorrichtung 29 ein. Ebenfalls kommuniziert die Regelungseinrichtung 47 mit dem Wechselrichter 41. Die Regelungseinrichtung 48 des Zusatzheizgeräts 30 stellt anhand der ermittelten Temperatur die elektrische Leistung des dritten und vierten Verdichters 33, 34 ein. Kommunikationswege 46 der Regelungseinrichtungen 47, 48 sind mit Strich-Punkt-Linien dargestellt. Die Steuerungs- und/der Regelungseinrichtung 47 kann außerdem eine Messung der angeforderten elektrischen Leistung des Gebäudes in die Steuerung und/oder Regelung mit einzubeziehen, zum Beispiel mit dem Ziel, möglichst wenig elektrische Leistung zu erzeugen, die nicht im selben Gebäude verbraucht werden kann.

In Fig. 2 ist ein weiteres Ausführungsbeispiel einer erfindungsgemäßen Kraft-Wärme-Kopplungsanlage 10 mit zwei Verwendungseinrichtungen 50, 51 dargestellt. Im Folgenden wird nur auf die Unterschiede im Vergleich zu Fig. 1 eingegangen.

Das Erdgas und die Luft werden im Zusatzheizgerät 30 mit Hilfe eines in einem gemeinsamen Abgasstrom 78 angeordneten Verdichters 35 angesaugt, wobei das Verhältnis von Erdgas und Luft durch ein Ventil 31 im Strömungsweg 76 und ein Ventil 32 im Strömungsweg 77 eingestellt werden kann. Analog wird in der Brennstoffzellenanlage 20 durch einen Verdichter 27' im Abgasstrom 75 die Menge von Erdgas und Luft und durch Ventile 25, 26 in den Strömungswegen 70, 71 das Verhältnis von Erdgas zu Luft eingestellt. Eine Rezirkulation findet nicht statt.

Der Nachbrenner 24 und das Zusatzheizgerät 30 sind strömungstechnisch im Kreislauf 60 in Reihe angeordnet. Ein 3/2 Wegeventil 64 hinter dem Nachbrenner 24 kann in Zeiten zu hoher Wärmeproduktion der Brennstoffzellenanlage 20 so umgeschaltet werden, dass das Wasser die Wärme der Brennstoffzellenanlage 20 nicht zu den Verwendungseinrichtungen 50, 51, sondern zu einem Wärmespeicher 42 transportiert. Die so gespeicherte Wärme kann in Zeiten eines hohen Wärmebedarfs mit Hilfe der Pumpe 63 den Verwendungseinrichtungen 50, 51 zur Verfügung gestellt werden.

Die Kraft-Wärme-Kopplungsanlage 10 weist eine gemeinsame Regelungseinrichtung 40 auf, die eine Außentemperatur mit Hilfe eines ersten Temperaturmessgerätes 43 und Temperaturen des Wärmespeichers 42 an zwei verschiedenen Stellen mit Hilfe eines zweiten und dritten Temperaturmessgerätes 44, 45 misst. Die gemessenen Temperaturen werden auf Kommunikationswege 46 an die Regelungseinrichtung 40 übermittelt, die daraufhin veranlasst, dass die Ventile 25, 26, 31, 32, die Verdichter 27', 35 und der Wechselrichter 41 entsprechend des erfindungsgemäßen Verfahrens eingestellt werden. Ebenfalls kann vorgesehen sein, dass die Regelungseinrichtung 40 die Pumpen 61, 63, 65 einstellt (nicht dargestellt). Die Regelungseinrichtung 40 kann außerdem eine Messung der angeforderten elektrischen Leistung des Gebäudes nutzen.

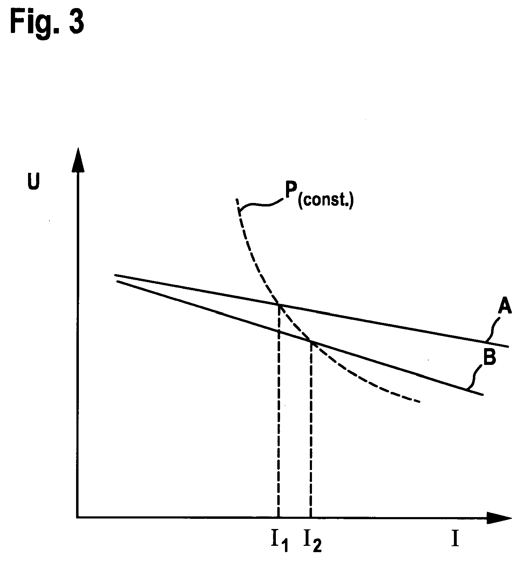

Fig. 3 zeigt eine Auftragung einer elektrischen Spannung U über einem elektrischen Strom I. Die Gerade A zeigt die Abhängigkeit der Spannung U von dem Strom I bei einem niedrigen ersten Anteil des ersten Brennstoffes, während die Gerade B die Abhängigkeit der Spannung U von dem Strom I bei einem hohen ersten Anteil des ersten Brennstoffes darstellt. Die Kurve P(const.) zeigt eine Linie konstanter elektrischer Leistung P. Bei einem niedrigen ersten Anteil (Gerade A) ist bei gleicher Leistung P der Strom I verringert, so dass eine Alterung der Brennstoffzelle 21 neben der Wirkung des erniedrigten Gasnutzungsgrads weiter verringert werden kann.

## Patentansprüche

1. Verfahren zum Betrieb einer Kraft-Wärme-Kopplungsanlage (10),
wobei ein erster Anteil eines ersten Brennstoffes in mindestens einer Brennstoffzelle (21) einer Brennstoffzellenanlage (20) der Kraft-Wärme-Kopplungsanlage (10) elektrochemisch umgesetzt wird, wodurch eine elektrische Leistung und Wärme erzeugt wird,
wobei ein zweiter Anteil des ersten Brennstoffes, der die Brennstoffzelle (21) ohne Umsetzung verlässt, nach dem Austritt aus der Brennstoffzelle (21) in einem Nachbrenner (24) der Brennstoffzellenanlage (20) verbrannt wird und dabei Wärme erzeugt wird,
wobei in einem Zusatzheizgerät (30) der Kraft-Wärme-Kopplungsanlage (10) ein zweiter Brennstoff verbrennbar ist und dabei Wärme erzeugbar ist,
wobei an einem optimalen Betriebspunkt der Brennstoffzelle (21) ein optimaler erster Anteil des ersten Brennstoffes umsetzbar ist, wobei, wenn ein Wärmebedarf höher ist, als bei dem optimalen Betriebspunkt der Brennstoffzelle (21) in der Brennstoffzellenanlage (20) erzeugbar ist, der erste Anteil des ersten Brennstoffes im Vergleich zum optimalen Betriebspunkt erniedrigt ist, so dass mehr Wärme als am optimalen Betriebspunkt in dem Nachbrenner(24) erzeugt wird, wobei Wasser als ein wärmeaufnehmendes Medium die Brennstoffzellenanlage durchströmt
**dadurch gekennzeichnet,**
**dass** das Wasser die
Brennstoffzellenanlage (20) und das Zusatzheizgerät (30) nacheinander oder parallel in einem Kreislauf (60) durchströmt, um die Wärme der Kraft-Wärme-Kopplungsanlage (10) zu Verwendungseinrichtungen (50, 51) zu transportieren.

2. Verfahren nach Anspruch 1, **dadurch gekennzeichnet, dass** der erniedrigte erste Anteil des ersten Brennstoffes dadurch erzeugt wird, dass mehr erster Brennstoff durch die Brennstoffzelle (21) geleitet wird.

3. Verfahren nach Anspruch 1 oder 2, **dadurch gekennzeichnet, dass** der erste Anteil des ersten Brennstoffes nur bis zu einem unteren Grenzwert erniedrigbar ist.

4. Verfahren nach einem der vorhergehenden Ansprüche, **dadurch gekennzeichnet, dass**, wenn der Wärmebedarf so hoch ist, wie in der Brennstoffzellenanlage (20) bei einer Einstellung des ersten Anteils des ersten Brennstoffes zwischen dem unteren Grenzwert und dem optimalen Anteil erzeugt wird, die Brennstoffzellenanlage (20) ohne Wärmerzeugung im Zusatzheizgerät (30) die geforderte Wärme erzeugt.

5. Verfahren nach einem der Ansprüche 1 bis 3, **dadurch gekennzeichnet, dass**, wenn der Wärmebedarf höher ist, als in der Brennstoffzellenanlage (20) bei einer Einstellung des ersten Anteils des ersten Brennstoffes an dem unteren Grenzwert erzeugt wird, der zweite Brennstoff in dem Zusatzheizgerät (30) verbrannt wird, um zusätzliche Wärme zu erzeugen.

6. Verfahren nach einem der vorhergehenden Ansprüche, **dadurch gekennzeichnet, dass** der Wärmebedarf durch Messen einer Außentemperatur und/oder mindestens einer Temperatur des Wassers als wärmeaufnehmenden Mediums in dem Kreislauf (60) und/oder mindestens einer Temperatur eines Heizkreises (50) und/oder einer entnommenen Warmwassermenge aus einem Warmwassersystem (51) und/oder mindestens einer Temperatur eines Wärmespeichers (42) ermittelt wird.

7. Verfahren nach einem der vorhergehenden Ansprüche, **dadurch gekennzeichnet, dass** die Zufuhr an zweitem Brennstoff zu dem Zusatzheizgerät (30) und/oder die Zufuhr an erstem Brennstoff zu der Brennstoffzelle (21) durch eine gemeinsame Steuerung und/oder Regelung (40) eingestellt wird.

8. Verfahren nach einem der Ansprüche 1 bis 6, **dadurch gekennzeichnet, dass** die Zufuhr an zweitem Brennstoff zu dem Zusatzheizgerät (30) und/oder die Zufuhr an erstem Brennstoff zu der Brennstoffzelle (21) jeweils durch eine eigenständige Steuerung und/oder Regelung (47, 48) erfolgt, wobei insbesondere jede Steuerung und/oder Regelung (47, 48) die Temperatur eines Wärmespeichers (24)oder mindestens eine Temperatur des wassers als wärmeaufnehmenden Mediums in dem Kreislauf (60) kennt.

9. Kraft-Wärme-Kopplungsanlage (10)
mit einer Brennstoffzellenanlage (20), die mindestens eine Brennstoffzelle (21) und einen Nachbrenner (24) aufweist, wobei in der Brennstoffzelle (21) ein erster Anteil eines ersten Brennstoffes elektrochemisch umsetzbar ist,
und wobei in dem Nachbrenner (24) ein zweiter Anteil des ersten Brennstoffes, der die Brennstoffzelle (21) ohne umgesetzt zu sein verlässt, verbrennbar ist,
und mit einem Zusatzheizgerät (30), wobei in dem Zusatzheizgerät (30) ein zweiter Brennstoff verbrennbar ist,
wobei die Kraft-Wärme-Kopplungsanlage (10) mindestens eine Steuerung und/oder Regelung (40, 47, 48) aufweist, die bei einem Wärmebedarf, der höher ist als die Wärme, die an einem optimalen Betriebspunkt der Brennstoffzelle (21) durch die Brennstoffzellenanlage (20) erzeugbar ist, den ersten Anteil des ersten Brennstoffes erniedrigt hat, so dass mehr erster Brennstoff als an dem optimalen Betriebspunkt der Brennstoffzelle im Nachbrenner (24) verbrennt, wobei die Brennstoffzellenanlage von wasser
als einem wärmeaufnehmenden Medium durchströmbar ist, **dadurch gekennzechnet,**
dass die Brennstoffzellenanlage (20) und das Zusatzheizgerät (30) nacheinander oder parallel in einem Kreislauf (60) von dem Wasser durchströmbar sind, um die Wärme der Kraft-Wärme-Kopplungsanlage (10) zu Verwendungseinrichtungen (50, 51) zu transportieren.

## Claims

1. Method for operating a cogeneration plant (10), wherein a first fraction of a first fuel is electrochemically converted in at least one fuel cell (21) of a fuel cell plant (20) of the cogeneration plant (10), thus generating electrical power and heat,
wherein a second fraction of the first fuel, which leaves the fuel cell (21) without conversion, is combusted, after it leaves the fuel cell (21), in an afterburner (24) of the fuel cell plant (20), thus generating heat,
wherein a second fuel can be combusted in an auxiliary heating unit (30) of the cogeneration plant (10), and heat can thus be generated,
wherein at an optimum operating point of the fuel cell (21), an optimum first fraction of the first fuel can be converted,
wherein, if more heat is required than can be generated at the optimum operating point of the fuel cell (21) in the fuel cell plant (20), the first fraction of the first fuel is reduced in relation to the optimum operating point, such that more heat is generated in the afterburner (24) than at the optimum operating point,
wherein water as a heat-absorbing medium flows through the fuel cell plant,
**characterized**
**in that** the water flows through the fuel cell plant (20) and the auxiliary heating unit (30) in sequence or in parallel in a circuit (60), in order to transport the heat of the cogeneration plant (10) to consumer devices (50, 51).

2. Method according to Claim 1, **characterized in that** the reduced first fraction of the first fuel is generated by directing more first fuel through the fuel cell (21).

3. Method according to Claim 1 or 2, **characterized in that** the first fraction of the first fuel can be reduced only as far as a lower limit value.

4. Method according to one of the preceding claims, **characterized in that**, if the heat required is equal to that generated in the fuel cell plant (20) when the first fraction of the first fuel is set between the lower limit value and the optimum fraction, the fuel cell plant (20) generates the required heat without generation of heat in the auxiliary heating unit (30).

5. Method according to one of Claims 1 to 3, **characterized in that**, if the heat required is greater than that generated in the fuel cell plant (20) when the first fraction of the first fuel is set at the lower limit value, the second fuel is combusted in the auxiliary heating unit (30) in order to generate additional heat.

6. Method according to one of the preceding claims, **characterized in that** the heat requirement is determined by measuring an external temperature and/or at least one temperature of the water as heat-absorbing medium in the circuit (60) and/or at least one temperature of a heating circuit (50) and/or of a quantity of hot water withdrawn from a hot water system (51) and/or at least one temperature of a heat reservoir (42).

7. Method according to one of the preceding claims, **characterized in that** the supply of second fuel to the auxiliary heating unit (30) and/or the supply of first fuel to the fuel cell (21) is set by a common open- and/or closed-loop control unit (40).

8. Method according to one of Claims 1 to 6, **characterized in that** the supply of second fuel to the auxiliary heating unit (30) and/or the supply of first fuel to the fuel cell (21) is in each case effected by a stand-alone open- and/or closed-loop control unit (47, 48), wherein in particular each open- and/or closed-loop control unit (47, 48) knows the temperature of a heat reservoir (24) or at least one temperature of the water as heat-absorbing medium in the circuit (60).

9. Cogeneration plant (10)
having a fuel cell plant (20) which has at least one fuel cell (21) and an afterburner (24), wherein a first fraction of a first fuel can be electrochemically converted in the fuel cell (21), and wherein a second fraction of the first fuel, which leaves the fuel cell (21) without having been converted, can be combusted in the afterburner (24),
and having an auxiliary heating unit (30), wherein a second fuel can be combusted in the auxiliary heating unit (30),
wherein the cogeneration plant (10) has at least one open- and/or closed-loop control unit (40, 47, 48) which, in the event of the heat required being greater than the heat which can be generated by the fuel cell plant (20) at an optimum operating point of the fuel cell (21), has lowered the first fraction of the first fuel such that more first fuel is burnt in the afterburner (24) than at the optimum operating point of the fuel cell,
wherein water as a heat-absorbing medium can be made to flow through the fuel cell plant, **characterized**
**in that** the water can be made to flow through the fuel cell plant (20) and the auxiliary heating unit (30) in sequence or in parallel in a circuit (60), in order to transport the heat of the cogeneration plant (10) to consumer devices (50, 51).

## Revendications

1. Procédé pour faire fonctionner une installation de couplage chaleur-force (10), dans lequel on convertit par voie électrochimique une première fraction d'un premier combustible dans au moins une pile à combustible (21) d'une installation de piles à combustible (20) de l'installation de couplage chaleur-force (10), ce qui permet de produire une puissance électrique et de la chaleur,
dans lequel on brûle une deuxième fraction du premier combustible, qui quitte la pile à combustible (21) sans conversion, après sa sortie hors de la pile à combustible (21) dans un post-brûleur (24) de l'installation de piles à combustible (20) et on produit ainsi de la chaleur,
dans lequel un deuxième combustible peut être brûlé dans un appareil de chauffage additionnel (30) de l'installation de couplage chaleur-force (10) et de la chaleur peut ainsi être produite,
dans lequel une première fraction optimale du premier combustible peut être convertie à un point de fonctionnement optimal de la pile à combustible (21), dans lequel, lorsqu'une demande de chaleur est plus élevée, que ce qui peut être produit au point de fonctionnement optimal de la pile à combustible (21) de l'installation de piles à combustible (20), la première fraction du premier combustible est abaissée par comparaison avec le point de fonctionnement optimal, de telle manière que l'on produise dans le post-brûleur (24) plus de chaleur qu'au point de fonctionnement optimal,
dans lequel de l'eau circule à travers l'installation de piles à combustible comme liquide de prélèvement de chaleur,
**caractérisé en ce que** l'eau circule à travers l'installation de piles à combustible (20) et l'appareil de chauffage additionnel (30) l'un après l'autre ou en parallèle en un circuit (60), afin de transporter la chaleur de l'installation de couplage chaleur-force (10) vers des dispositifs d'utilisation (50, 51).

2. Procédé selon la revendication 1, **caractérisé en ce que** l'on produit la première fraction abaissée du premier combustible par le fait que l'on conduit plus du premier combustible à travers la pile à combustible (21).

3. Procédé selon la revendication 1 ou 2, **caractérisé en ce que** la première fraction du premier combustible ne peut être abaissée que jusqu'à une valeur limite inférieure.

4. Procédé selon l'une quelconque des revendications précédentes, **caractérisé en ce que**, lorsque la demande de chaleur est aussi élevée que ce que l'on produit dans l'installation de piles à combustible (20) pour un réglage de la première fraction du premier combustible entre une valeur limite intérieure et le point de fonctionnement optimal, l'installation de piles à combustible (20) produit la chaleur demandée sans production de chaleur dans l'appareil de chauffage additionnel (30).

5. Procédé selon l'une quelconque des revendications 1 à 3, **caractérisé en ce que**, lorsque la demande de chaleur est plus élevée que ce que l'on produit dans l'installation de piles à combustible (20) pour un réglage de la première fraction du premier combustible à la valeur limite inférieure, on brûle le deuxième combustible dans l'appareil de chauffage additionnel (30) afin de produire de la chaleur supplémentaire.

6. Procédé selon l'une quelconque des revendications précédentes, **caractérisé en ce que** l'on détermine la demande de chaleur par mesure d'une température extérieure et/ou d'au moins une température de l'eau comme liquide de prélèvement de chaleur dans le circuit (60) et/ou d'au moins une température d'un circuit de chauffage (50) et/ou d'une quantité d'eau chaude prélevée hors d'un système d'eau chaude (51) et/ou d'au moins une température d'un accumulateur de chaleur (42).

7. Procédé selon l'une quelconque des revendications précédentes, **caractérisé en ce que** l'on règle la fourniture du deuxième combustible à l'appareil de chauffage additionnel (30) et/ou la fourniture du premier combustible à la pile à combustible (21) au moyen d'une commande et/ou d'une régulation commune (40).

8. Procédé selon l'une quelconque des revendications 1 à 6, **caractérisé en ce que** la fourniture du deuxième combustible à l'appareil de chauffage additionnel (30) et/ou la fourniture du premier combustible à la pile à combustible (21) est respectivement effectuée par une commande et/ou une régulation autonome (47, 48), dans lequel en particulier chaque commande et/ou régulation (47, 48) connaît la température d'un accumulateur de chaleur (24) ou au moins une température de l'eau comme liquide de prélèvement de chaleur dans le circuit (60).

9. Installation de couplage chaleur-force (10) avec une installation de piles à combustible (20), qui présente au moins une pile à combustible (21) et un post-brûleur (24), dans laquelle une première fraction d'un premier combustible peut être convertie par voie électrochimique dans la pile à combustible (21), et dans laquelle une deuxième fraction du premier combustible, qui quitte la pile à combustible (21) sans être brûlée, peut être brûlée dans le post-brûleur (24),
et avec un appareil de chauffage additionnel (30), dans laquelle un deuxième combustible peut être brûlé dans l'appareil de chauffage additionnel (30),
dans laquelle l'installation de couplage chaleur-force (10) présente au moins une commande et/ou régulation (40, 47, 48) qui, lors d'une demande de chaleur qui est plus élevée que la chaleur qui peut être produite par l'installation de piles à combustible (20) à un point de fonctionnement optimal de la pile à combustible (21), a abaissé la première fraction du premier combustible, de telle manière que l'on brûle dans le post-brûleur (24) plus de premier combustible qu'au point de fonctionnement optimal de la pile à combustible,
dans laquelle l'installation de piles à combustible peut être parcourue par de l'eau comme liquide de prélèvement de chaleur,
**caractérisée en ce que** l'installation de piles à combustible (20) et l'appareil de chauffage additionnel (30) peuvent être parcourus par l'eau l'un après l'autre ou en parallèle en un circuit (60), afin de transporter la chaleur de l'installation de couplage chaleur-force (10) vers des dispositifs d'utilisation (50, 51).
